# FASCICULE DE BREVET EUROPEEN

(11) **EP 4 279 379 B1**
(45) Date de publication et mention de la délivrance du brevet: **13.03.2024**
(21) Numéro de dépôt: 23160794.6
(22) Date de dépôt: 08.03.2023
(51) Int. Cl.: B64C 25/32, B64C 25/52

(54) **TRAIN D'ATTERRISSAGE À PATINS MUNI DE PATINETTES ANTI-ENFONCEMENT**
KUFENFAHRWERK MIT KUFENVERLÄNGERUNGEN ZUR VERHINDERUNG DES EINSINKENS
SKID LANDING GEAR WITH ANTI-SINKING SKID EXTENSIONS

(30) Priorité: 19.05.2022 FR 2204776
(43) Date de publication de la demande: 22.11.2023
(73) Titulaire: AIRBUS HELICOPTERS, 13725 Marignane Cedex (FR)
(72) Inventeur: GENELOT, Nicolas, 13111 COUDOUX (FR)
(74) Mandataire: GPI Brevets

(56) Documents cités:
- WO-A1-2011/054084
- FR-A1- 2 372 081
- FR-A1- 2 895 368

## Description

La présente invention concerne un train d'atterrissage à patins muni de patinettes anti-enfoncement, le train d'atterrissage étant destiné à un aéronef. Par exemple, le train d'atterrissage est agencé au sein d'un aéronef ayant une voilure tournante.

Classiquement, un giravion comporte un train d'atterrissage sur lequel le giravion repose au sol. Parmi les trains d'atterrissage, un train d'atterrissage à patins est muni d'un premier patin et d'un deuxième patin destinés à être en contact avec le sol. Le premier patin et le deuxième patin sont écartés transversalement l'un de l'autre, en étant situés de part et d'autre d'un plan longitudinal - vertical de symétrie du train d'atterrissage.

De plus, le train d'atterrissage à patins est usuellement muni d'une première traverse et d'une deuxième traverse pour relier chaque patin à une structure d'un aéronef.

Chaque traverse comprend une première branche connectée au premier patin et à la structure, et une deuxième branche connectée au deuxième patin et à la structure. Chaque traverse peut être discontinue, ou continue en comprenant un tronçon central reliant la première branche à la deuxième branche.

La première traverse est parfois dite «traverse arrière » dans la mesure où cette première traverse est connectée aux parties arrière des premier et deuxième patins. A l'inverse, la deuxième traverse est dite « traverse avant » puisque cette deuxième traverse est connectée aux parties avant des premier et deuxième patins.

Par ailleurs, le premier patin est muni d'une première partie longitudinale d'appui, le deuxième patin étant muni d'une deuxième partie longitudinale d'appui. La première partie longitudinale d'appui et la deuxième partie longitudinale d'appui définissent conjointement un plan de contact du train d'atterrissage sur le sol lorsque l'aéronef est posé sur un sol. Un tel plan de contact est dénommé « plan de sustentation » par la suite.

En outre, le train d'atterrissage peut comprendre une première partie avant s'éloignant longitudinalement et en élévation de la première partie longitudinale d'appui. De même, le train d'atterrissage peut comprendre une deuxième partie avant s'éloignant longitudinalement et en élévation de la deuxième partie longitudinale d'appui. Les première et deuxième parties avant peuvent être réalisées dans une même pièce et peuvent présenter les mêmes caractéristiques que les première et deuxième parties longitudinales d'appui respectives. Les première et deuxième parties avant peuvent faire partie d'une traverse avant.

Les documents US2641423 et FR 2749561 décrivent des trains d'atterrissage à patins.

Lors d'un atterrissage sur un sol mou ou d'un décollage avec une action sur une commande cyclique au sein d'un hélicoptère, la partie arrière d'une partie longitudinale d'appui d'un patin est susceptible de s'enfoncer dans le sol lorsque l'aéronef présente une assiette longitudinale à cabrer. En raison de l'assiette de l'aéronef, seule la partie arrière du patin repose sur le sol. La faible surface de contact du patin avec le sol mou peut engendrer son enfoncement dans ce sol mou, un tel enfoncement étant susceptible de perturber la manoeuvre d'atterrissage.

Lors d'un décollage, un enfoncement de la partie arrière d'un patin dans un sol mou est susceptible de créer un point de blocage qui peut conduire à un comportement non désiré de l'aéronef.

Le document FR2372081 est éloigné de cette problématique en proposant de prolonger la partie arrière d'une partie longitudinale d'appui avec une lame souple fine, afin de lutter contre le phénomène de résonance sol et non pas pour éviter un désagrément sur un sol mou. La lame souple présente une surface inférieure décalée au-dessous du plan de sustentation pour entrer en contact avec le sol avant la partie longitudinale d'appui proprement dite. La lame souple est alors susceptible de s'enfoncer dans un sol mou et de générer les perturbations précitées.

Un autre type de trains d'atterrissage comporte une surface additionnelle agencée sous la partie arrière d'une partie longitudinale d'appui, en s'étendant transversalement de part et d'autre de la partie arrière. Cette surface additionnelle peut comprendre des arêtes franches pouvant créer des points de blocage en présence d'une assiette en roulis et/ou en tangage non nulle et d'un sol mou.

Le document WO 2011/054084 A1 décrit une surface additionnelle plane adjointe à un patin d'un train d'atterrissage.

Le document FR 2 895 368 A1 présente un giravion muni d'un train d'atterrissage à patins. A l'arrière des patins se trouvent des lamelles.

La présente invention a alors pour objet de proposer un train d'atterrissage à patins visant à limiter les risques d'enfoncement sur un sol mou.

Il est à noter qu'un sol dur peut être représenté dans un modèle par éléments finis à l'aide d'éléments ayant une raideur infinie, alors qu'au contraire le sol mou est représenté par des éléments ayant une raideur qui n'est pas infinie. Plus précisément, pour bien appréhender le problème, la raideur d'un sol mou peut être définie de manière non constante. Ainsi, la raideur du sol mou peut avoir une première valeur importante au moment du contact entre le train d'atterrissage et le sol, puis une deuxième valeur faible suite à ce contact de l'ordre d'un centième de ladite première valeur. Par exemple, le sol mou a une raideur égale à une première valeur valant 0.1 Megapascal (MPa) par millimètre (mm) au moment dudit contact, puis une deuxième valeur valant 0.001 Megapascal (MPa) par millimètre (mm) après ce contact.

L'invention vise ainsi un train d'atterrissage muni d'un premier patin pourvu d'une première partie longitudinale d'appui et d'un deuxième patin pourvu d'une deuxième partie longitudinale d'appui, chacune desdites première partie longitudinale d'appui et deuxième partie longitudinale d'appui s'étendant longitudinalement selon un sens arrière d'un axe longitudinal propre d'une extrémité avant à une extrémité arrière. La première partie longitudinale d'appui et la deuxième partie longitudinale d'appui peuvent définir conjointement un plan de sustentation sur un sol.

Ainsi, la première partie longitudinale d'appui s'étend longitudinalement selon un sens arrière d'un premier axe longitudinal propre d'une première extrémité avant vers une première extrémité arrière. De même, la deuxième partie longitudinale d'appui s'étend longitudinalement selon un sens arrière d'un deuxième axe longitudinal propre d'une deuxième extrémité avant vers une deuxième extrémité arrière.

La première partie longitudinale d'appui et la deuxième partie longitudinale d'appui sont respectivement prolongées selon le sens arrière associé par une première patinette et une deuxième patinette, chaque patinette présentant une face inférieure en vis-à-vis d'un sol lorsque le train d'atterrissage repose sur le sol, chaque face inférieure étant courbée longitudinalement et transversalement vers le sol, chaque face inférieure ayant une forme convexe au regard dudit sol.

Le terme « courbée » signifie que chaque patinette présente une face inférieure qui change de direction sans former d'angles ou une arête vive.

La face inférieure d'une patinette peut alors avoir la forme de la face convexe d'un cuilleron, à savoir de la face d'un cuilleron qui ne sert pas de contenant. Pour rappel, un cuilleron est l'extrémité creuse d'une cuillère servant de contenant, le cuilleron étant prolongé par le manche de la cuillère. Un cuilleron s'étend selon son épaisseur d'une face convexe à une face concave qui est susceptible de servir de contenant, par exemple pour accueillir un sucre.

Par suite, chaque patinette est bombée vers le sol selon deux directions non parallèles, par exemple en présentant deux rayons de courbure par rapport à deux axes géométriques différents, contrairement à une simple lame flexible. Les deux rayons de courbure peuvent être supérieurs le cas échéant à un rayon des parties longitudinales d'appui. Les deux axes géométriques peuvent ne pas être concourants mais ne sont pas parallèles. Un axe géométrique peut être sensiblement parallèle à l'axe longitudinal de la partie longitudinale d'appui correspondante, l'autre axe géométrique étant parallèle à un axe orthogonal à l'axe longitudinal de la partie longitudinale d'appui correspondante.

Par suite, la face inférieure de chaque patinette susceptible de toucher le sol ne présente pas d'arêtes vives pouvant provoquer un blocage suite à un mouvement en roulis et/ou en tangage.

De plus, en présence d'un sol mou la forme doublement bombée de la face inférieure permet d'avoir une surface de contact avec le sol qui augmente au fur et à mesure d'un enfoncement dans un sol mou indépendamment de l'assiette de l'aéronef. La forme bombée comporte une ligne courbée longitudinalement qui remonte à partir d'un point bas en s'éloignant de la partie longitudinale d'appui correspondante ce qui peut permettre de limiter un enfoncement dans un sol mou sans créer de blocage franc de son extrémité libre. La forme bombée comporte une ligne courbée latéralement pouvant permettre de ne pas créer un blocage latéral.

Cette forme doublement bombée tend alors à limiter un enfoncement dans un sol mou et/ou un risque de blocage dans un sol mou.

Le train d'atterrissage peut de plus comporter une ou plusieurs des caractéristiques qui suivent, prises seules ou en combinaison.

Selon une possibilité, la première partie longitudinale d'appui et la deuxième partie longitudinale d'appui définissant conjointement un plan de sustentation sur un sol, chaque face inférieure peut être courbée longitudinalement en ayant une section longitudinale incurvée dans un plan longitudinal vertical passant par la partie longitudinale d'appui respective et orthogonal au plan de sustentation.

Chaque patinette peut ainsi avoir une surface de contact importante avec le sol quel que soit l'angle d'assiette en tangage à cabrer du train d'atterrissage.

Par exemple, la section longitudinale présente un rayon de courbure par rapport à un axe géométrique transversal qui est orthogonal au plan longitudinal vertical, voire supérieur à un rayon d'une section circulaire de la partie longitudinale d'appui correspondante.

Selon une possibilité compatible avec les précédentes, la première partie longitudinale d'appui et la deuxième partie longitudinale d'appui définissant conjointement un plan de sustentation sur un sol, lorsque le train d'atterrissage repose sur le sol, chaque patinette peut être selon le sens arrière respectif courbée vers le sol pour atteindre un point bas puis peut remonter pour s'éloigner du plan de sustentation.

Chaque patinette peut ainsi avoir une surface de contact importante avec le sol quel que soit l'angle d'assiette en tangage à cabrer du train d'atterrissage.

Selon une possibilité compatible avec les précédentes, la première partie longitudinale d'appui et la deuxième partie longitudinale d'appui définissant conjointement un plan de sustentation sur un sol, chaque face inférieure peut être courbée transversalement en ayant une section transversale incurvée dans un plan transversal vertical qui est orthogonal à l'axe longitudinal de la partie longitudinale d'appui respective.

Chaque patinette peut ainsi avoir une surface de contact importante avec le sol quel que soit l'angle d'assiette en roulis du train d'atterrissage.

Par exemple, la section transversale présente un rayon de courbure par rapport à un axe géométrique longitudinal sensiblement parallèle à l'axe longitudinal de la partie longitudinale d'appui correspondante, voire supérieur à un rayon d'une section circulaire de la partie longitudinale d'appui correspondante.

Selon une possibilité compatible avec les précédentes, la première partie longitudinale d'appui et la deuxième partie longitudinale d'appui définissant conjointement un plan de sustentation sur un sol, dans un plan transversal vertical orthogonal à l'axe longitudinal d'une partie longitudinale d'appui, lorsque le train d'atterrissage repose sur le sol, chaque patinette peut être courbée vers le sol en partant d'un bord pour atteindre un point inférieur puis peut remonter pour s'éloigner du point inférieur jusqu'à une bordure.

Chaque patinette peut ainsi avoir une surface de contact importante avec le sol quel que soit l'angle d'assiette en roulis du train d'atterrissage.

Selon une possibilité compatible avec les précédentes, chaque face inférieure peut s'élargir en s'éloignant de la partie longitudinale d'appui respective.

Cette forme permet d'obtenir moins de pression sur l'extrémité libre de chaque patinette en présence d'un angle important d'assiette en tangage à cabrer du train d'atterrissage.

Selon une possibilité compatible avec les précédentes, chaque patinette peut avoir une forme tronconique qui s'évase en partant de la partie longitudinale d'appui respective vue de dessus selon un sens vertical dirigé vers le sol lorsque le train d'atterrissage repose sur ce sol.

Par ailleurs, l'invention vise aussi un aéronef muni d'un tel train d'atterrissage.

Par ailleurs, l'invention vise aussi un procédé pour limiter un enfoncement d'un train d'atterrissage sur un sol mou ou un blocage du train d'atterrissage dans un sol mou, le train d'atterrissage étant muni d'un premier patin pourvu d'une première partie longitudinale d'appui et d'un deuxième patin pourvu d'une deuxième partie longitudinale d'appui, chacune desdites première partie longitudinale d'appui et deuxième partie longitudinale d'appui s'étendant longitudinalement selon un sens arrière d' un axe longitudinal propre d'une extrémité avant à une extrémité arrière. La première partie longitudinale d'appui et la deuxième partie longitudinale d'appui peuvent définir conjointement un plan de sustentation sur un sol.

Ce procédé comporte un agencement d'une première patinette et d'une deuxième patinette qui prolongent respectivement la première partie longitudinale d'appui et la deuxième partie longitudinale d'appui selon le sens arrière correspondant, chaque patinette présentant une face inférieure en vis-à-vis d'un sol lorsque le train d'atterrissage repose sur le sol, chaque face inférieure étant courbée longitudinalement et transversalement vers le sol, chaque face inférieure ayant une forme convexe au regard dudit sol.

L'invention et ses avantages apparaîtront avec plus de détails dans le cadre de la description qui suit avec des exemples donnés à titre illustratif en référence aux figures annexées qui représentent :
la figure 1, une vue en trois dimensions d'un aéronef muni d'un train d'atterrissage selon l'invention,
la figure 2, une vue de côté d'une patinette,
la figure 3, une coupe transversale d'une patinette,
la figure 4, une vue de dessus d'une patinette,
la figure 5, une vue de côté d'une patinette explicitant le fonctionnement de l'invention, et
la figure 6, une coupe transversale d'une patinette explicitant le fonctionnement de l'invention.

Les éléments présents dans plusieurs figures distinctes sont affectés d'une seule et même référence.

Trois directions X, Y et Z orthogonales les unes par rapport aux autres sont représentées sur les figures.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation.

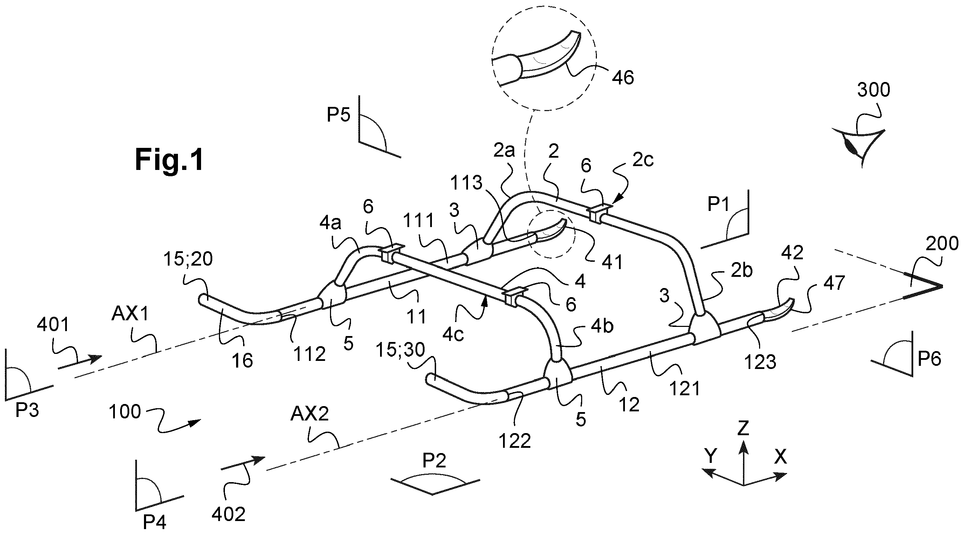

La figure 1 présente un giravion 100 selon l'invention, tel qu'un hélicoptère par exemple. Ce giravion 100 comporte une structure qui repose sur un train d'atterrissage 1, cette structure n'étant pas représentée pour ne pas alourdir la figure.

Ce train d'atterrissage 1 comporte un premier patin 11 et un deuxième patin 12 destinés à être en contact avec le sol 200 lorsque le giravion 100 repose sur ce sol 200.

Le premier patin 11 et le deuxième patin 12 sont éventuellement respectivement disposés transversalement à droite et à gauche d'un plan antéropostérieur P1 médian, voire de symétrie longitudinal, du giravion 100 et du train d'atterrissage 1. La droite et la gauche sont définies par rapport à un observateur 300 qui regarderait vers l'avant depuis l'arrière du train d'atterrissage 1.

Chaque patin 11,12 est muni d'une partie longitudinale d'appui 111,121. Ainsi, le premier patin 11 est pourvu d'une première partie longitudinale d'appui 111, le deuxième patin 12 étant pourvu d'une deuxième partie longitudinale d'appui 121. Chacune des première partie longitudinale d'appui 111 et deuxième partie longitudinale d'appui 121 s'étend longitudinalement respectivement selon un sens arrière 401, 402 d'un axe longitudinal AX1, AX2 propre d'une extrémité avant 112, 122 à une extrémité arrière 113, 123.

Ainsi, le premier patin 11 comporte une première partie longitudinale d'appui 111 s'étendant longitudinalement le long d'un premier axe longitudinal AX1. En particulier, la première partie longitudinale d'appui 111 s'étend selon un premier sens arrière 401 d'une extrémité avant dite « première extrémité avant 112 » vers une extrémité arrière dite « première extrémité arrière 113 ». La première partie longitudinale d'appui 111 peut prendre la forme d'un tube creux, par exemple à section circulaire et donc courbée selon une unique direction.

De même, le deuxième patin 12 comporte une deuxième partie longitudinale d'appui 121 s'étendant longitudinalement le long d'un deuxième axe longitudinal AX2. En particulier, la deuxième partie longitudinale d'appui 121 s'étend selon un deuxième sens arrière 402 d'une extrémité avant dite « deuxième extrémité avant 122 » vers une extrémité arrière dite « deuxième extrémité arrière 123 ». La deuxième partie longitudinale d'appui 121 peut prendre la forme d'un tube creux, par exemple à section circulaire.

La deuxième partie longitudinale d'appui 121 et la première partie longitudinale d'appui 111 peuvent être identiques et/ou disposées symétriquement de part et d'autre du plan antéropostérieur P1.

Par ailleurs, la première partie longitudinale d'appui 111 et la deuxième partie longitudinale d'appui 121 peuvent définir conjointement un plan de sustentation P2 sur lequel repose le train d'atterrissage 1 sur un sol, par exemple plat à savoir sur un sol horizontal dans le référentiel terrestre.

Par ailleurs, chaque patin 11,12 peut comporter un organe dit « portion avant 15 ».

Ainsi, le premier patin 11 comporte une portion avant 15 dite « première portion avant 20 ». La première portion avant 20 s'étend vers l'avant et en élévation à partir de la première partie longitudinale d'appui 111. Dès lors, la première partie longitudinale d'appui 111 est prolongée vers l'avant par la première portion avant 20.

De même, le deuxième patin 12 comporte une portion avant 15 dite « deuxième portion avant 30 ». La deuxième portion avant 30 s'étend vers l'avant et en élévation à partir de la deuxième partie longitudinale d'appui 121. Dès lors, la deuxième partie longitudinale d'appui 121 est prolongée vers l'avant par la deuxième portion avant 30.

Chaque portion avant 15 peut ainsi être en saillie longitudinale vers l'avant de la partie longitudinale d'appui 111,121 correspondante.

Eventuellement, la première portion avant 20 et la deuxième portion avant 30 sont identiques et/ou disposées symétriquement de part et d'autre du plan antéropostérieur P1.

Optionnellement, une portion avant 15 peut comporter un tronçon droit s'étendant uniquement longitudinalement à partir de l'extrémité avant de la partie longitudinale d'appui 111,121 correspondante, puis un tronçon courbe s'étendant longitudinalement et en élévation à partir du tronçon droit. Selon une alternative, une portion avant 15 suit une ligne courbe.

Selon une autre caractéristique possible, le premier patin 11 et le deuxième patin 12 peuvent être reliés transversalement à une traverse arrière 2. Par exemple, une première branche descendante 2a et une deuxième branche descendante 2b de cette traverse arrière 2 peuvent être fixées respectivement au premier patin 11 et au deuxième patin 12 par des moyens de fixation 3 usuels. Ces moyens de fixation 3 peuvent comprendre des manchons par exemple.

La traverse arrière 2 peut être continue. Une portion sommitale arrière 2c est alors agencée entre la première branche descendante 2a et la deuxième branche descendante 2b de la traverse arrière 2. La portion sommitale arrière 2c de la traverse arrière 2 peut alors être fixée à la structure du giravion 100 via au moins un moyen de fixation 6 usuel.

Alternativement, la traverse arrière 2 peut être discontinue et alors dépourvue de la portion sommitale arrière 2c. Chaque branche descendante 2a,2b peut alors être attachée à la structure via au moins un moyen de fixation usuel.

Le premier patin 11 et le deuxième patin 12 peuvent être reliés transversalement à une traverse avant 4. La traverse avant 4 possède une première branche descendante 4a pouvant être fixée au premier patin 11 par une pièce de jonction 5 usuelle, par exemple de type manchon. De plus, la traverse avant 4 possède une deuxième branche descendante 4b pouvant être fixée au deuxième patin 12 par une pièce de jonction 5 usuelle, par exemple de type manchon.

La traverse avant 4 peut être discontinue ou continue en comprenant une portion sommitale avant 4c agencée entre les première et deuxième branches descendantes 4a, 4b voire peut être fixée à la structure du giravion 100 via au moins un moyen de fixation 6 usuel.

Le premier patin 11, le deuxième patin 12, la traverse avant 4 et la traverse arrière 2 peuvent comprendre chacune un unique tube ou plusieurs tubes assemblés les uns aux autres.

Selon un autre aspect, la traverse avant 4 peut être fixée à chaque patin 11,12 sensiblement entre l'extrémité avant de chaque patin 11,12 et la traverse arrière 2, ou peut s'étendre entre les deux portions avant précitées.

Selon une autre caractéristique, la première partie longitudinale d'appui 111 et la deuxième partie longitudinale d'appui 121 sont respectivement prolongées selon le sens arrière 401, 402 associé par une première patinette 41 et une deuxième patinette 42. Chaque patinette 41,42 s'étend longitudinalement d'une extrémité proximale du côté d'une partie longitudinale d'appui 111,121 jusqu'à une extrémité libre.

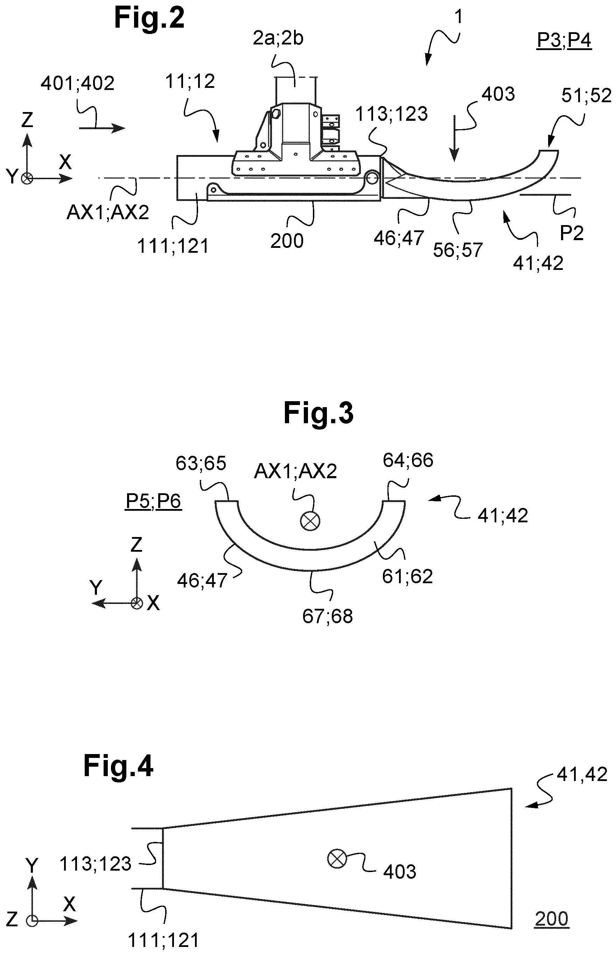

Les figures 2 à 4 illustrent des vues d'une patinette pouvant être indifféremment la première patinette 41 ou la deuxième patinette 42.

En référence à la figure 2, lorsque le train d'atterrissage 1 repose sur un sol 200, chaque patinette 41, 42 comprend une face inférieure 46, 47 en vis-à-vis du sol 200, voire en contact avec le sol 200. Chaque face inférieure 46, 47 est courbée longitudinalement et transversalement vers le sol 200, chaque face inférieure 46, 47 ayant une forme doublement convexe vue du sol 200.

Dès lors, la première patinette 41 comprend une première face inférieure 46 en vis-à-vis du sol 200. La première face inférieure 46 est en outre courbée selon deux directions différentes et non parallèles, voire orthogonales.

Ainsi, la première face inférieure 46 peut être courbée longitudinalement. Dès lors, la première face inférieure 46 présente une section longitudinale dite « première section longitudinale 51 » incurvée dans un plan longitudinal vertical dit « premier plan longitudinal vertical P3 », ce premier plan longitudinal vertical P3 passant par la première partie longitudinale d'appui 111 et étant orthogonal au plan de sustentation P2.

Eventuellement et en s'éloignant de la première partie longitudinale d'appui 111, la première patinette 41 est courbée afin de se rapprocher du sol 200 jusqu'à un point bas dit « premier point bas 56 » puis remonte pour s'éloigner du plan de sustentation P2. Le premier point bas 56 peut être situé sous le plan de sustentation P2.

De même, la deuxième face inférieure 47 peut être courbée longitudinalement. Dès lors, la deuxième face inférieure 47 présente une section longitudinale dite « deuxième section longitudinale 52 » incurvée dans un plan longitudinal vertical dit « deuxième plan longitudinal vertical P4 », ce deuxième plan longitudinal vertical P4 passant par la deuxième partie longitudinale d'appui 121 et étant orthogonal au plan de sustentation P2.

Eventuellement et en s'éloignant de la deuxième partie longitudinale d'appui 121, la deuxième patinette 42 est courbée afin de se rapprocher du sol 200 jusqu'à un point bas dit « deuxième point bas 57 » puis remonte pour s'éloigner du plan de sustentation P2. Le deuxième point bas 57 peut être situé sous le plan de sustentation P2.

En référence à la figure 3, chaque face inférieure 46, 47 peut être courbée transversalement en ayant une section transversale 61, 62 incurvée dans un plan transversal vertical P5, P6

Ainsi, la première face inférieure 46 peut comprendre une première section transversale 61 incurvée dans un premier plan transversal vertical P5. Ce premier plan transversal vertical P5 est orthogonal au premier axe longitudinal AX1 de la première partie longitudinale d'appui 111 respective et de fait orthogonal également au plan de sustentation P2.

Lorsque le train d'atterrissage 1 repose sur le sol 200, dans le premier plan transversal vertical P5, la première patinette 41 peut être courbée afin que la première face inférieure 46 s'étende d'un premier bord 63 pour atteindre un point inférieur dit « premier point inférieur 67 » puis remonte pour s'éloigner du premier point inférieur 67 jusqu'à une première bordure 64.

De même, la deuxième face inférieure 47 peut comprendre une deuxième section transversale 62 incurvée dans un deuxième plan transversal vertical P6. Ce deuxième plan transversal vertical P6 est orthogonal au deuxième axe longitudinal AX2 de la deuxième partie longitudinale d'appui 121 respective et de fait orthogonal également au plan de sustentation P2.

Lorsque le train d'atterrissage 1 repose sur le sol 200, dans le deuxième plan transversal vertical P6, la deuxième patinette 42 peut être courbée afin que la deuxième face inférieure 47 s'étende d'un deuxième bord 65 pour atteindre un point inférieur dit « deuxième point inférieur 68 » puis remonte pour s'éloigner du deuxième point inférieur 68 jusqu'à une deuxième bordure 66.

En référence à la figure 4, chaque face inférieure 46, 47 s'élargit en s'éloignant de la partie longitudinale d'appui 111, 121 respective jusqu'à son extrémité libre.

Ainsi, en partant de la première extrémité arrière 113, la première face inférieure 46 peut s'évaser. Par exemple, la première patinette 41 présente ainsi une forme tronconique qui s'évase en partant de la première partie longitudinale d'appui 111, vue de dessus selon un sens vertical 403 dirigé vers le sol 200 et lorsque le train d'atterrissage 1 repose sur ce sol 200.

De même, en partant de la deuxième extrémité arrière 123, la deuxième face inférieure 47 peut s'évaser. Par exemple, la deuxième patinette 42 présente ainsi une forme tronconique qui s'évase en partant de la deuxième partie longitudinale d'appui 121, vue de dessus selon un sens vertical 403 dirigé vers le sol 200 lorsque le train d'atterrissage 1 repose sur ce sol 200.

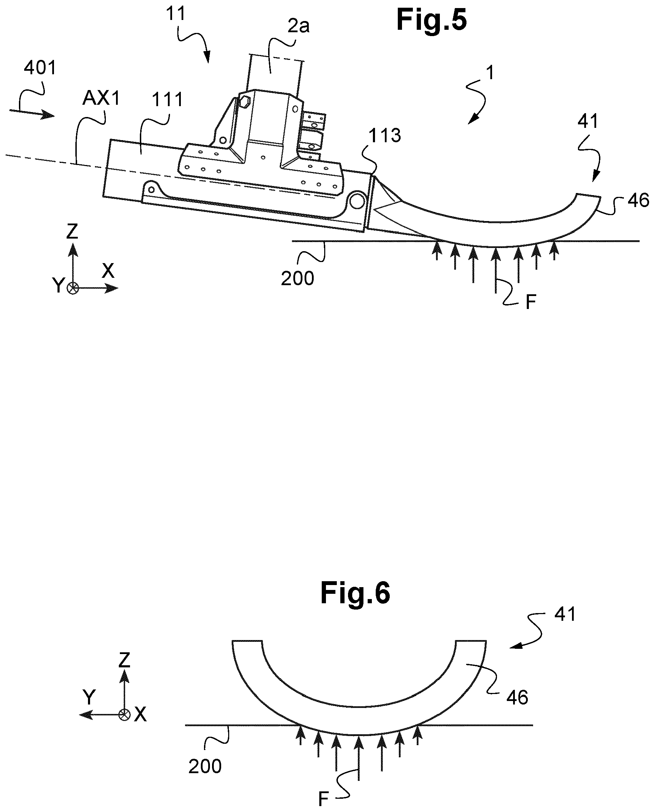

Les figures 5 et 6 illustrent le fonctionnement d'un train d'atterrissage 1 selon l'invention.

En référence à la figure 5, selon le procédé appliqué, une patinette 41,42 est agencée dans le prolongement de chaque partie longitudinale d'appui 111,121. Les figures 5 et 6 présentent la première patinette 41 mais les explications suivantes sont identiques pour la deuxième patinette 42.

Lorsque le train d'atterrissage 1 présente un angle d'assiette en tangage à cabrer, la première patinette 41 est en contact avec le sol 200. Si le sol 200 est mou, la première patinette 41 peut tendre à s'enfoncer dans le sol 200. Or, la forme courbe de la première patinette 41 permet de maximiser la surface de contact avec le sol 200. La réaction F du sol 200 sur la première patinette 41 s'applique alors sur une plus grande surface au fur et à mesure de son enfoncement ce qui tend à limiter l'enfoncement de la première patinette 41. De plus, la première patinette 41 ne présente pas une arête vive susceptible de provoquer un blocage du train d'atterrissage en raison de sa face inférieure 46 bombée.

En référence à la figure 6, en il en va de même en présence d'un angle d'assiette en roulis.

## Revendications

1. Train d'atterrissage (1) muni d'un premier patin (11) pourvu d'une première partie longitudinale d'appui (111) et d'un deuxième patin (12) pourvu d'une deuxième partie longitudinale d'appui (121), chacune desdites première partie longitudinale d'appui (111) et deuxième partie longitudinale d'appui (121) s'étendant longitudinalement selon un sens arrière (401, 402) d'un axe longitudinal (AX1, AX2) propre d'une extrémité avant (112, 122) à une extrémité arrière (113, 123), la première partie longitudinale d'appui (111) et la deuxième partie longitudinale d'appui (121) étant respectivement prolongées selon le sens arrière (401, 402) associé par une première patinette (41) et une deuxième patinette (42), chaque patinette (41, 42) présentant une face inférieure (46, 47) en vis-à-vis d'un sol lorsque le train d'atterrissage (1) repose sur le sol (200),
**caractérisé en ce que** chaque face inférieure (46, 47) est courbée longitudinalement et transversalement vers le sol (200), chaque face inférieure (46, 47) ayant une forme convexe au regard dudit sol (200).

2. Train d'atterrissage selon la revendication 1,
où la première partie longitudinale d'appui (111) et la deuxième partie longitudinale d'appui (121) définissant conjointement un plan de sustentation (P2) sur un sol (200) plat, chaque face inférieure (46, 47) est courbée longitudinalement en ayant une section longitudinale (51, 52) incurvée dans un plan longitudinal vertical (P3, P4) passant par la partie longitudinale d'appui (111, 121) respective et orthogonal au plan de sustentation (P2).

3. Train d'atterrissage selon l'une quelconque des revendications 1 à 2,
où la première partie longitudinale d'appui (111) et la deuxième partie longitudinale d'appui (121) définissant conjointement un plan de sustentation (P2) sur un sol (200) plat, lorsque le train d'atterrissage (1) repose sur le sol (200), chaque patinette (41, 42) est selon le sens arrière (401, 402) respectif courbée vers le sol (200) pour atteindre un point bas (56, 57) puis remonte pour s'éloigner du plan de sustentation (P2).

4. Train d'atterrissage selon l'une quelconque des revendications 1 à 3,
où la première partie longitudinale d'appui (111) et la deuxième partie longitudinale d'appui (121) définissant conjointement un plan de sustentation (P2) sur un sol (200) plat, chaque face inférieure (46, 47) est courbée transversalement en ayant une section transversale (61, 62) incurvée dans un plan transversal vertical (P5, P6) qui est orthogonal à l'axe longitudinal (AX1, AX2) de la partie longitudinale d'appui (111, 121) respective.

5. Train d'atterrissage selon l'une quelconque des revendications 1 à 4,
où la première partie longitudinale d'appui (111) et la deuxième partie longitudinale d'appui (121) définissant conjointement un plan de sustentation (P2) sur un sol (200) plat, dans un plan transversal vertical (P5, P6) orthogonal à l'axe longitudinal (AX1, AX2) d'une partie longitudinale d'appui (111, 121), lorsque le train d'atterrissage (1) repose sur le sol (200), chaque patinette (41, 42) est courbée vers le sol en partant d'un bord (63, 65) pour atteindre un point inférieur (67, 68) puis remonte pour s'éloigner du point inférieur (67, 68) jusqu'à une bordure (64, 66).

6. Train d'atterrissage selon l'une quelconque des revendications 1 à 5,
où chaque face inférieure (46, 47) s'élargit en s'éloignant de la partie longitudinale d'appui (111, 121) respective.

7. Train d'atterrissage selon la revendication 6,
où chaque patinette (41, 42) a une forme tronconique qui s'évase en partant de la partie longitudinale d'appui (111, 121) respective, vue de dessus selon un sens vertical (403) dirigé vers le sol (200) et lorsque le train d'atterrissage (1) repose sur ce sol (200).

8. Aéronef (100) muni d'un train d'atterrissage (1),
**caractérisé en ce que** le train d'atterrissage (1) est selon l'une quelconque des revendications 1 à 7.

9. Procédé pour limiter un enfoncement d'un train d'atterrissage (1) sur un sol mou ou un blocage du train d'atterrissage (1) dans un sol mou, le train d'atterrissage (1) étant muni d'un premier patin (11) pourvu d'une première partie longitudinale d'appui (111) et d'un deuxième patin (12) pourvu d'une deuxième partie longitudinale d'appui (121), chacune desdites première partie longitudinale d'appui (111) et deuxième partie longitudinale d'appui (121) s'étendant longitudinalement selon un sens arrière (401, 402) d'un axe longitudinal (AX1, AX2) propre d'une extrémité avant (112, 122) à une extrémité arrière (113, 123),
**caractérisé en ce que** le procédé comporte un agencement d'une première patinette (41) et d'une deuxième patinette (42) qui prolongent respectivement la première partie longitudinale d'appui (111) et la deuxième partie longitudinale d'appui (121) selon le sens arrière (401, 402) correspondant, chaque patinette (41, 42) présentant une face inférieure (46, 47) en vis-à-vis d'un sol (200) lorsque le train d'atterrissage (1) repose sur le sol (200), chaque face inférieure (46, 47) étant courbée longitudinalement et transversalement vers le sol (200), chaque face inférieure (46, 47) ayant une forme convexe au regard dudit sol (200).

## Patentansprüche

1. Landevorrichtung (1) mit einer ersten Kufe (11), die mit einem ersten longitudinalen Stützabschnitt (111) versehen ist, und einer zweiten Kufe (12), die mit einem zweiten longitudinalen Stützabschnitt (121) versehen ist, wobei sowohl der erste longitudinale Stützabschnitt (111) als auch der zweite longitudinale Stützabschnitt (121) sich longitudinal in einer Rückwärtsrichtung (401, 402) einer eigenen Längsachse (AX1, AX2) von einem vorderen Ende (112, 122) zu einem hinteren Ende (113, 123) erstreckt, wobei der erste longitudinale Stützabschnitt (111) und der zweite longitudinale Stützabschnitt (121) jeweils in der zugehörigen Rückwärtsrichtung (401, 402) durch eine erste Kufe (41) und eine zweite Kufe (42) verlängert sind, wobei jede Kufe (41, 42) eine Unterseite (46, 47) aufweist, die einem Boden zugewandt ist, wenn die Landevorrichtung (1) auf dem Boden (200) ruht,
**dadurch gekennzeichnet, dass** jede Unterseite (46, 47) in Längs- und Querrichtung zum Boden (200) hin gekrümmt ist, wobei jede Unterseite (46, 47) eine zum Boden (200) hin konvexe Form hat.

2. Landevorrichtung nach Anspruch 1,
bei der der erste longitudinale Stützabschnitt (111) und der zweite longitudinale Stützabschnitt (121) gemeinsam eine Tragebene (P2) auf einem ebenen Boden (200) definieren, und jede Unterseite (46, 47) in Längsrichtung gekrümmt ist, indem sie einen Längsschnitt (51, 52) aufweist, der in einer vertikalen Längsebene (P3, P4) gekrümmt ist, die durch den jeweiligen longitudinalen Stützabschnitt (111, 121) verläuft und orthogonal zur Auftriebsebene (P2) ist.

3. Landevorrichtung nach einem der Ansprüche 1 bis 2,
bei der der erste longitudinale Stützabschnitt (111) und der zweite longitudinale Stützabschnitt (121) gemeinsam eine Tragebene (P2) auf einem ebenen Boden (200) definieren, und, wenn die Landevorrichtung (1) auf dem Boden (200) ruht, jede Kufe (41, 42) in der jeweiligen Rückwärtsrichtung (401, 402) zum Boden (200) hin so gekrümmt ist, dass sie einen Tiefpunkt (56, 57) erreicht und dann wieder ansteigt, um sich von der Tragebene (P2) zu entfernen.

4. Landevorrichtung nach einem der Ansprüche 1 bis 3,
bei der der erste longitudinale Stützabschnitt (111) und der zweite longitudinale Stützabschnitt (121) gemeinsam eine Tragebene (P2) auf einem ebenen Boden (200) definieren, und jede Unterseite (46, 47) quer gekrümmt ist, indem sie einen Querschnitt (61, 62) aufweist, der in einer vertikalen Querebene (P5, P6) gekrümmt ist, die orthogonal zu der Längsachse (AX1, AX2) des jeweiligen longitudinalen Stützabschnitts (111, 121) verläuft.

5. Landevorrichtung nach einem der Ansprüche 1 bis 4,
bei der der erste longitudinale Stützabschnitt (111) und der zweite longitudinale Stützabschnitt (121) gemeinsam eine Tragebene (P2) auf einem ebenen Boden (200) definieren, und in einer vertikalen Querebene (P5, P6), die orthogonal zur Längsachse (AX1, AX2) eines longitudinalen Stützabschnitts (111, 121) ist, wenn die Landevorrichtung (1) auf dem Boden (200) ruht, jede Kufe (41, 42) ausgehend von einer Kante (63, 65) bis zu einem unteren Punkt (67, 68) zum Boden hin gebogen ist und dann wieder ansteigt, um sich vom unteren Punkt (67, 68) bis zu einer Kante (64, 66) zu entfernen.

6. Landevorrichtung nach einem der Ansprüche 1 bis 5,
bei der jede Unterseite (46, 47) von dem jeweiligen longitudinalen Stützabschnitt (111, 121) weg aufgeweitet ist.

7. Landevorrichtung nach Anspruch 6,
bei der jede Kufe (41, 42) eine Kegelform hat, die sich von oben in einer vertikalen Richtung (403) zum Boden (200) hin betrachtet, wenn die Landevorrichtung (1) auf diesem Boden (200) ruht, von dem jeweiligen longitudinalen Stützabschnitt (111, 121) aus aufgeweitet ist.

8. Luftfahrzeug (100) mit einer Landevorrichtung (1),
**dadurch gekennzeichnet, dass** die Landevorrichtung (1) gemäß einem der Ansprüche 1 bis 7 ist.

9. Verfahren zum Begrenzen eines Einsinkens einer Landevorrichtung (1) auf weichem Boden oder eines Steckenbleibens der Landevorrichtung (1) in weichem Boden, wobei die Landevorrichtung (1) eine erste Kufe (11), die mit einem ersten longitudinalen Stützabschnitt (111) versehen ist, und eine zweite Kufe (12), die mit einem zweiten longitudinalen Stützabschnitt (121) versehen ist, aufweist, wobei sowohl der erste longitudinale Stützabschnitt (111) als auch der zweite longitudinale Stützabschnitt (121) sich longitudinal in einer Rückwärtsrichtung (401, 402) einer eigenen Längsachse (AX1, AX2) von einem vorderen Ende (112, 122) zu einem hinteren Ende (113, 123) erstreckt,
**dadurch gekennzeichnet, dass** das Verfahren ein Anbringen einer ersten Kufe (41) und einer zweiten Kufe (42) umfasst, die jeweils den ersten longitudinalen Stützabschnitt (111) und den zweiten longitudinalen Stützabschnitt (121) in der entsprechenden Rückwärtsrichtung (401, 402) verlängern, wobei jede Kufe (41, 42) eine Unterseite (46, 47) aufweist, die einem Boden (200) zugewandt ist, wenn die Landevorrichtung (1) auf dem Boden (200) ruht, wobei jede Unterseite (46, 47) in Längs- und Querrichtung zum Boden (200) hin gekrümmt ist, wobei jede Unterseite (46, 47) eine zum Boden (200) hin konvexe Form hat.

## Claims

1. Landing gear (1) equipped with a first skid (11) provided with a first longitudinal support part (111) and a second skid (12) provided with a second longitudinal support part (121), each of said first longitudinal support part (111) and second longitudinal support part (121) extending longitudinally in a rearwards direction (401, 402) of a respective longitudinal axis (AX1, AX2) from a front end (112, 122) to a rear end (113, 123), the first longitudinal support part (111) and the second longitudinal support part (121) respectively being extended in the associated rearwards direction (401, 402) by a first skid extension (41) and a second skid extension (42), each skid extension (41, 42) having a lower side (46, 47) facing some ground when the landing gear (1) rests on the ground (200), **characterised in that** each lower side (46, 47) is curved longitudinally and transversely towards the ground (200), each lower side (46, 47) having a convex shape in respect of said ground (200).

2. Landing gear according to claim 1,
wherein as the first longitudinal support part (111) and the second longitudinal support part (121) jointly define a plane of support (P2) on some flat ground (200), each lower side (46, 47) is longitudinally curved in having a longitudinal section (51, 52) curved in a vertical longitudinal plane (P3, P4) passing through the respective longitudinal support part (111, 112) and orthogonal to the support plane (P2).

3. Landing gear according to either one of claims 1 to 2,
wherein as the first longitudinal support part (111) and the second longitudinal support part (121) jointly define a plane of support (P2) on some flat ground (200), when the landing gear (1) rests on the ground (200), each skid extension (41, 42) curves in the respective rearwards direction (401, 402) towards the ground (200) so as to reach a low point (56, 57) then rises again to move away from the support plane (P2).

4. Landing gear according to any one of claims 1 to 3,
wherein as the first longitudinal support part (111) and the second longitudinal support part (121) jointly define a plane of support (P2) on some flat ground (200), each lower side (46, 47) is transversely curved in having a transversal section (61, 62) curved in a vertical transversal plane (P5, P6), which is orthogonal to the longitudinal axis (AX1, AX2) of the respective longitudinal support part (111, 112).

5. Landing gear according to any one of claims 1 to 4,
wherein as the first longitudinal support part (111) and the second longitudinal support part (121) jointly define a plane of support (P2) on some flat ground (200), in a vertical transversal plane (P5, P6) orthogonal to the longitudinal axis (AX1, AX2) of a longitudinal support part (111, 112), when the landing gear (1) rests on the ground (200), each skid extension (41, 42) curves towards the ground starting from an edge (63, 65) so as to reach a low point (67, 68), then rises again to move away from the low point (67, 68) up to an edge (64, 66).

6. Landing gear according to any one of claims 1 to 5,
wherein each lower side (46, 47) widens as it moves away from the respective longitudinal support part (111, 112).

7. Landing gear according to claim 6,
wherein each skid extension (41, 42) has a truncated cone shape that flares away from the respective longitudinal support part (111, 112), seen from above in a vertical direction (403) oriented towards the ground (200) and when the landing gear (1) rests on this ground (200).

8. Aircraft (100) equipped with a landing gear (1)
**characterised in that** the landing gear (1) is according to any one of claims 1 to 7.

9. Method for limiting a landing gear (1) sinking on soft ground or the landing gear (1) sticking in soft ground, the landing gear (1) being equipped with a first skid (11) provided with a first longitudinal support part (111) and a second skid (12) provided with a second longitudinal support part (121), each of said first longitudinal support part (111) and second longitudinal support part (121) extending longitudinally in a rearwards direction (401, 402) of a respective longitudinal axis (AX1, AX2) from a front end (112, 122) to a rear end (113, 123),
**characterised in that** the method comprises an arrangement of a first skid extension (41) and a second skid extension (42), which respectively extend the first longitudinal support part (111) and the second longitudinal support part (121) in the corresponding rearwards direction (401, 402), each skid extension (41, 42) having a lower side (46, 47) facing some ground (200) when the landing gear (1) rests on the ground (200), each lower side (46, 47) being curved longitudinally and transversely towards the ground (200), each lower side (46, 47) having a convex shape in respect of said ground (200).
